# EUROPÄISCHE PATENTSCHRIFT

(11) **EP 2 252 673 B1**
(45) Veröffentlichungstag und Bekanntmachung des Hinweises auf die Patenterteilung: **31.07.2013**
(21) Anmeldenummer: 09720244.4
(22) Anmeldetag: 10.03.2009
(51) Int. Cl.: C10M 169/04, C09D 5/10, C10N 30/06, C10N 50/08

(54) **VERFAHREN ZUM EINSTELLEN DER REIBUNGSZAHL EINES METALLISCHEN WERKSTÜCKS**
METHOD FOR ADJUSTING THE FRICTION COEFFICIENT OF A METALLIC WORKPIECE
PROCÉDÉ POUR RÉGLER LE COEFFICIENT DE FROTTEMENT D' UNE PIÈCE MÉTALLIQUE

(30) Priorität: 13.03.2008 DE 102008014027
(43) Veröffentlichungstag der Anmeldung: 24.11.2010
(60) Teilanmeldung: 13172538.4
(73) Patentinhaber: EWALD DÖRKEN AG, 58313 Herdecke (DE)
(72) Erfinder: REUSMANN, Gerhard, 45259 Essen (DE); KRUSE, Thomas, 44229 Dortmund (DE); MERTENS, Heike, 58097 Hagen (DE)
(74) Vertreter: Kalkoff & Partner
(86) Internationale Anmeldenummer: PCT/EP2009/001704
(87) Internationale Veröffentlichungsnummer: WO 2009/112238

(56) Entgegenhaltungen:
- EP-A- 0 976 795
- EP-A- 1 712 654
- EP-A- 1 752 519
- EP-A- 1 894 987
- US-A1- 2007 196 632

## Beschreibung

Die Erfindung betrifft ein Verfahren zum Einstellen der Reibungszahl eines metallischen Werkstücks

Zur Erhöhung der Lebensdauer metallischer Werkstücke, die Feuchtigkeit ausgesetzt sind, ist eine Korrosionsschutzbeschichtung unerlässlich. Für galvanisierte oder elektrolytisch mit einer Metallschicht versehene Werkstücke beschreibt die US 2007/0196632 A1 einen mehrschichtigen Lackauftrag, der nahe an der Oberfläche des Werkstücks einen hohen Gehalt an Schmiermitteln aufweist, während weiter von der Oberfläche des Werkstücks entfernte Lackschichten einen geringeren Gehalt an Schmiermitteln aufweisen. Es wird unterstellt, dass die auf galvanisierten Oberflächen oder elektrolytisch abgeschiedenen Metallschichten aufgebrachten Lacke nicht abriebfest sind, so dass Schmiermittel in den äußeren Lackschichten nicht sinnvoll nutzbar sind. Neben der Beschichtung mit einer geschlossenen Metallschicht aus geeignetem Metall (z.B. Zink), üblicherweise durch Galvanisieren, ist eine Variante des Korrosionsschutzes die Beschichtung mit einem Korrosionsschutzmittel, das in flüssiger Form auf das Werkstück aufgebracht wird. Ein solches Korrosionsschutzmittel enthält üblicherweise neben einem Bindemittel und einem Lösemittel Metallpartikel. Nach dem Auftragen des Korrosionsschutzmittels auf das Werkstück härtet das Bindemittel unter Temperatur aus und die darin eingelagerten Metallpartikel bilden eine mehr oder weniger durchgehende Schutzschicht über dem Metallsubstrat.

Im Rahmen der vorliegenden Erfindung wird ein Korrosionsschutzmittel, das, wie geschildert, ein Bindemittel und Metallpartikel umfasst, als Basecoat bezeichnet. Diese Bezeichnung wird hier sowohl für das flüssige Korrosionschutzmittel verwendet, als für eine Beschichtung, die durch Auftragen und ggf. Aushärten wenigstens eines solchen Korrosionsschutzmittels entsteht.

Für Basecoats sind insbesondere Partikel aus Metallen von Bedeutung, die einerseits anodischen Korrosionsschutz bieten, da sie sich bei Oxidation mit einer witterungsbeständigen Schutzschicht überziehen, andererseits aber auch freiliegenden Teilen des Metallsubstrats kathodischen Korrosionsschutz bieten, da sie unedler als das Substrat sind und somit als Opferanode für dieses wirken. Für beide Arten ist eine möglichst lückenloseAbdeckungdes Substrats durch die Metall partikel wünschenswert, für den kathodischen Korrosionsschutz ist auch ein Kontakt der Metallpartikel untereinander und zum Substrat nötig, da nur solche Metallpartikel als Opferanode wirken können, die mit dem Substrat in elektrischem

Auch das Bindemittel kann zum Korrosionsschutz dienen, jedoch ist dieser im Gegensatz zum aktiven Korrosionsschutz durch die Metallpartikel von passiver Art, d.h. es werden durch eine diffusionshemmende Schicht korrosive Einflüsse vom Metallsubstrat weitestgehend ferngehalten.

Sind über den Korrosionsschutz hinaus bestimmte Oberflächeneigenschaften erwünscht, so verwendet man hierfür oftmals einen auf den Basecoat aufzutragenden Topcoat. Letzterer enthält oftmals keine Metallpartikel und wenn doch, dann zur Beeinflussung des Aussehens, nicht zum aktiven kathodischen bzw. anodischen Korrosionsschutz. Für bestimmte Anwendungen, z. B. Gewindeteile, werden dem Topcoat Schmiermittel zur Einstellung der Reibungszahl zugesetzt.

Besonders bei Massenkleinteilen, die im Tauchschleuderverfahren beschichtet werden, benötigt man in der Regel zwei Schichten des Basecoats, da nur so die Berührstellen - die bedingt durch den Applikationsprozess entstehen - ausgeglichen werden. So werden kommerziell bei Massenkleinteilen üblicherweise Systeme mit zwei Korrosionsschutz-Basecoatschichten und einer oder zwei Topcoatschichten zur Einstellung tribologischer Eigenschaften verwendet.

Es gibt auch die Möglichkeit, in den Basecoat Schmiermittel zu integrieren. Hiermit lassen sich Zeit und Kosten einsparen, da kein separater Topcoat zur Einstellung von Reibungszahlen verwendet werden muss.

Hieraus ergibt sich jedoch der Nachteil, dass man zur Einstellung von gewünschten Reibungszahlen an der Oberfläche den meist hoch pigmentierten Basecoats relativ viel Schmiermittel zugeben muss. Insbesondere bei hochwertigen Schmiermitteln wie Polytetrafluorethylen (PTFE) ergeben sich hierdurch hohe Kosten.

Die EP 0976 795 offenbart eine antikorrosiv wirkende Beschichtung, mittels dem sich die Reibzahl auf der Oberfläche einer Beschichtung einstellen lässt. Das Einstellen der Reibzahl wird möglich durch eine vorgegebene, komplexe Zusammensetzung von organischen Bindemitteln und Wachsen. Organische Bindemittel sind jedoch nicht sehr beständig und die daraus hergestellten Beschichtungen sind um sich eingeschränkt verwendbar.

Die US 2007/0176632 lehrt, bei einem mit einer Korrosionsbeschichtung versehenen Werkstück hohe Konzentration von Schmiermitteln nahe der Oberfläche des Werkstücks aufzubringen, während die dem Werkstück abgewandte Oberfläche der Korrosionsschutzbeschichtung nur eine geringe Menge Schmiermittel aufweist.

Die Aufgabe der Erfindung besteht somit darin, eine Möglichkeit zum effizienteren Einsatz von Schmiermittel in Antikorrosionsbeschichtung vorzuschlagen.

Die Aufgabe wird erfindungsgemäß durch ein Verfahren zum Einstellen der Reibungszahl eines metallischen Werkstücks nach Anspruch 1 sowie durch ein metallisches Werkstück nach Anspruch 13 gelöst.

Beim erfindungsgemäßen Verfahren zum Einstellen der Reibungszahl der Oberfläche eines metallischen Werkstücks wird eine mehrschichtige Beschichtung auf das Werkstück aufgebracht und ausgehärtet. Hierzu werden mehrere Basecoats, jeweils aufweisend mindestens ein Bindemittel und metallische Partikel, schichtweise aufgebracht. Mindestens einer der verwendeten Basecoats weist mindestens ein Schmiermittel auf. Charakterisiert man die Beschichtung durch eine dem Werkstück zugewandte Grenzfläche und eine dem Werkstück abgewandte Grenzfläche, so wird erfindungsgemäß die Reibungszahl durch eine Schmiermittelkonzentration eingestellt, die an der dem Werkstück zugewandten Grenzfläche niedriger ist als an der dem Werkstück abgewandten Grenzfläche.

Der Erfindung liegt hierbei die Erkenntnis zu Grunde, dass es mit einem gezielten, selektiven Einsatz von Schmiermittel innerhalb einer aus mehreren Basecoats aufgebauten Beschichtung möglich ist, die gewünschten tribologischen Eigenschaften eines Werkstücks einzustellen.

Innerhalb des erfindungsgemäßen Verfahrens können schichtweise mehrere Basecoats aufgetragen werden, die Schmiermittel in unterschiedlicher Konzentration und/oder Zusammensetzung umfassen, was auch die Möglichkeit einschließt, das wenigstens ein Basecoat (nicht jedoch alle) kein Schmiermittel umfasst.

Es ist dem Fachmann bekannt, dass bestimmte Schmiermittel, wie z. B. Fettsäuren wie Ölsäure oder Stearinsäure, oft bei der Herstellung von Rohstoffen, insbesondere von Metallpartikeln für Korrosionschutzmittel als Verunreinigung eingeschleppt werden, ohne dass ein Einsatz als Schmiermittel beabsichtigt ist. Diese Stoffe werden in der Regel bei der Herstellung von Metallpartikeln als Hilfsstoffe eingesetzt und haften den Partikeln zwangsläufigwenigstens als Spuren - an. Es können auch kleinere Mengen dickflüssiger Wachse, z. B. Polyethylenwachse, als Additive zugesetzt sein, um z. B. die Rheologie des Beschichtungsmittels einzustellen. Im Rahmen dieser Erfindung werden derartige Spuren von

Schmiermittel in dem Sinne außer Acht gelassen, dass eine Schicht, die weniger als 1,0 Gewichts-% Schmiermittel enthält, als Schicht ohne Schmiermittel bezeichnet wird. Nur wenn der Gewichtsanteil bei dem genannten Wert oder darüber liegt, gilt die Schicht als Schmiermittel aufweisend.

Das erfindungsgemäße Verfahren ermöglicht einen sehr effizienten Einsatz von Schmiermitteln, insbesondere von festen Schmiermitteln. Es ist nunmehr möglich, Schmiermittel in hoher Konzentration in der Nähe der dem Werkstück abgewandten Grenzfläche einzusetzen, wo diese zur Einstellung einer Reibungszahl dienen, während in den darunter liegenden Bereichen weniger oder kein Schmiermittel eingesetzt wird. Daher kann der Einsatz von Schmiermitteln auf die Bereiche beschränkt werden, wo sie die größte Wirkung entfalten. Dies sind in der Regel die äußeren, vom Werkstück abgewandten Bereiche des Basecoats. Die Außenfläche des Basecoats, d.h. die vom Werkstück abgewandte Grenzfläche (oder zumindest Teile hiervon), ist bei der Verwendung des Werkstücks üblicherweise die Kontaktfläche mit anderen Werkstücken, also z.B. die Kontaktstelle zwischen einer Schraube und einer Mutter. Es hat sich gezeigt, dass die Reibungszahl vornehmlich durch die Schmiermittelkonzentration im Bereich dieser Grenzfläche bestimmt wird. Es kann daher erfindungsgemäß also wesentlich weniger Schmiermittel eingesetzt werden als bei Verfahren nach dem Stand der Technik. Hierdurch ergeben sich in Anbetracht der sehr großen Anzahl zu beschichtender Teile, insbesondere bei Massenkleinteilen, entscheidende Kostenersparnisse.

Des Weiteren hat sich gezeigt, dass Schmiermittel oft dramatisch die Korrosionsschutzeigenschaften verschlechtern. Schmiermittelzusätze, z.B. Wachse, können zum einen die Ausbildung eines geschlossenen Bindemittelfilms stören, zum anderen setzen sie sich zwischen oder auf die Metallpigmente und behindern so die Ausbildung einer geschlossenen Schutzschicht. So weisen beispielsweise Zinkflake-Beschichtungen mit integriertem Schmiermittel zur Einstellung von Reibungszahlen oft einen geringeren Korrosionsschutz auf als die analogen Beschichtungen ohne Schmiermittelzusatz.

Da man bei dem erfindungsgemäßen Verfahren in der Lage ist, die Schmiermittelkonzentration innerhalb eines Basecoats selektiv, insbesondere an der dem Werkstück zugewandten Grenzfläche, gering zu halten oder dort gar kein Schmiermittel einzusetzen, kann sich

dort ein geschlossener Film aktiver Metallpartikel bilden. Die dort eingesetzten Metallpartikel tragen im vollen Maß zum aktiven Korrosionsschutz bei, da ohne den störenden Einfluss des Schmiermittels der notwendige Kontakt zwischen den Metallpartikeln, typischerweise Zink- und/oder Aluminiumpartikel, gewährleistet ist. Diejenigen Schichten des Basecoats, in denen Schmiermittel, insbesondere in höherer Konzentration, eingesetzt wird, tragen allerdings aufgrund der enthaltenen Metallpartikel auch zum aktiven Korrosionsschutz bei. Dies ist ein entscheidender Vorteil gegenüber den Verfahren nach dem Stand der Technik, bei denen das Schmiermittel ausschließlich im Topcoat enthalten ist, der keine Metallpartikel zum Korrosionsschutz enthält. Durch das erfindungsgemäße Verfahren ergibt sich eine stabile, effektive Korrosionsschutzbeschichtung mit einer definiert einstellbaren Reibungszahl, die bisher bekannten Beschichtungen überlegen ist.

Bei dem erfindungsgemäßen Verfahren wird bei gleichbleibender Schmiermittelzusammensetzung die Schmiermittelkonzentration derart variiert, dass diese an der dem Werkstück abgewandten Grenzfläche größer ist als an der dem Werkstück zugewandten Grenzfläche. Wie bereits geschildert, ist es hierbei beispielsweise denkbar, dass sich im Bereich der letztgenannten Grenzfläche wenig oder kein Schmiermittel befindet, wodurch ein optimaler Korrosionsschutz durch die enthaltenen Metallpartikel gewährleistet werden kann. Gleichzeitig kann im Außenbereich des Basecoats, also in der Nähe der dem Werkstück abgewandten Grenzfläche, mehr Schmiermittel vorhanden sein, um eine definierte Reibungszahl zu gewährleisten.

In einer bevorzugten Weiterbildung des Verfahrens weist die Schmiermittelzusammensetzung Schmiermittel mit einem Schmelzpunkt von unter 170°C, bevorzugt unter 150°C (im Folgenden niedrigschmelzende Schmiermittel genannt) und Schmiermittel mit einem Schmelzpunkt von 150°C (im Folgenden hochschmelzende Schmiermittel genannt), bevorzugt von 170°C oder höher auf, wobei sich die Konzentration von Schmiermitteln mit einem Schmelzpunkt von 150°C bzw. 170°C oder höher an der dem Werkstück abgewandten Grenzfläche unterscheidet von der an der dem Werkstück zugewandten Grenzfläche. Beispiele für niedrigschmelzende Schmiermittel sind Polypropylen (PP) und Polyethylen (PE), Beispiele für hochschmelzende Schmiermittel sind PTFE, Molybdänsulfid, Graphit und Bornitrid. Wird das Bindemittel bei einer Temperatur von etwa 150°C bzw. 170°C oder höher ausgehärtet, so werden im Zuge dieses thermischen Aushärtungsprozesses die niedrigschmelzenden Schmiermittel aufgeschmolzen und können ggf. auch mit dem Bindemittel vernetzen.

Bestimmte hochschmelzende Schmiermittel, z.B. PTFE oder modifiziertes PTFE, ECTFE oder Polyvinylidenfluorid (PVDF), die im Basecoat in der Regel partikelförmig enthalten sind, zeigen unter den erhöhten Temperaturen im Zuge des Aushärtungsprozesses eine Art von "Aufschwimmen", d. h. sie wandern nach außen, in Richtung der von Werkstück abgewandten Grenzfläche. Dieser Effekt wird im Rahmen des erfindungsgemäßen Verfahrens dazu genutzt, im Bereich der genannten Grenzfläche eine höhere Konzentration dieser Schmiermittel einzustellen.

Die Variationsmöglichkeiten des erfindungsgemäßen Verfahrens sind velfältig. Es ist auch eine kombinierte Variation von Schmiermittelkonzentration und Schmiermittelzusammensetzung denkbar, so dass sich sowohl erstere als auch letztere an der dem Werkstück abgewandten Grenzfläche von denjenigen auf der dem Werkstück zugewandten Grenzfläche unterscheiden. So kann z.B. ein erfindungsgemäßer Basecoat nahe dem Werkstück 20 Gewichts-% PE enthalten, während er an der dem Werkstück abgewandten Grenzfläche 10 Gewichts-% PVDF enthält. Durch eine derartige Kombination kann gewährleistet werden, dass bei einer oberflächlichen Beschädigung des Basecoats eine im Wesentlichen unverändass Basecoats eine derte Reibungszahl erhalten bleibt.

Als Schmiermittel kommen sämtliche aus dem Stand der Technik bekannten Stoffe in Frage, so z. B. Halogenkohlenwasserstoffe, insbesondere Polytetrafluoroethylen (PTFE), Polyvinylidenfluorid (PVDF), Tetrafuorethylen/Hexafluorpropylen-Copolymer (FEP), Perfluoralkoxy-Copolymer (PFA), Copolymer von Tetrafluorethylen mit perfluoriertem Propylen und Perfluoralkylvinylether (EPE), Copolymer aus Tetrafluorethylen und Perfluormethylvinylether (MFA), MoS₂, Bornitrid, Graphit, fluoriertes Graphit, Carnaubawachs, Polysulfone, Polyolefinharze, insbesondere Polyethylen (PE) und Polypropylen (PP), Mischungen derselben oder eine Kombination hieraus. Hierbei ist es, wie bereits dargelegt wurde, auch möglich, schichtweise unterschiedliche Schmiermittel zu verwenden.

Die verwendeten Metallpartikel können verschiedenster Art sein. Diese können aus Zink, Aluminium, Zinn, Magnesium, Nickel, Kobalt, Mangan, Titan oder Legierungen derselben bestehen. Es ist auch denkbar, Partikel verschiedener Metalle oder Legierungen zu mischen. Die Partikel können in Form von Plättchen, Körnern, Staub oder einer Kombination hieraus vorliegen. Eine besonders bevorzugte Art von Metallpartikeln stellen Zinkplättchen oder Zinklegierungsplättchen dar.

Beim erfindungsgemäßen Verfahren können Basecoats mit verschiedenen Bindemitteln verwendet werden, die bereits aus dem Stand der Technik bekannt sind. Eine wichtige Gruppe von Bindemitteln sind Silane, insbesondere organofunktionale Silane, z.B. γ-Glycidoxypropyltrimethoxysilan. Neben Silanen eignen sich auch Siloxane, wie z.B. Methyloxypolysiloxan oder Silikate, wie z.B. Alkalisilikate oder Alkylsilikate. Insbesondere können die genannten Bindemittel in Verbindung mit aminischen Härtern (ggf. Aminosilanen) verwendet werden.

Des Weiteren kommen Bindemittel auf Basis von Titanaten in Frage. Diese enthalten typischerweise Alkyltitanatester, so z.B. monomere Ester wie Tetrabutyltitanat, aber auch polymere wie Polybutyltitanat.

Als Bindemittel können auch Chrom-VI-Verbindungen dienen, die z.B. in Form von Salzen wie Ammonium- oder Alkalichromaten zugegeben werden können.

Die genannten Bindemittel polymerisieren während des Aushärtungsprozesses unter Abspaltung von Wasser und/oder Alkoholen. Daher finden sich in der ausgehärteten Beschichtung vornehmlich Polymerisationsprodukte dieser Bindemittel. Es eignen sich auch Mischungen der genannten Bindemittel, so z. B. von Silanen und Titanaten, die in diesem Fall ein gemeinsames Polymer bilden können.

Weiterhin können beim erfindungsgemäßen Verfahren organische Bindemittel wie Epoxide, Urethane, Acrylate, (z.B. Methylmethacrylat) und/oder Polyester als organische Copolymere in Verbindung mit den oben genannten anorganischen Bindemitteln eingesetzt werden.

Eine mögliche Vorgehensweise zur erfindungsgemäßen Einstellung einer Reibungszahl besteht darin, dass zunächst ein erster Basecoat, umfassend ein Bindemittel, Metallpartikel und optional ein Schmiermittel, in wässriger oder organischer Phase, ein- oder mehrschichtig auf das Werkstück aufgebracht wird. Anschließend wird wenigstens ein weiterer Basecoat, jeweils umfassend ein Bindemittel, Metallpartikel und optional ein Schmiermittel, in wässriger oder organischer Phase, schichtweise aufgebracht. Hierbei werden- einschließlich des ersten Basecoats - wenigstens zwei Basecoats mit unterschiedlicher Schmiermittelkonzentration und/oder -zusammensetzung verwendet. Nach jedem derBeschichtungsschritte kann ein thermisches Aushärten der aufgetragenen Beschichtung erfolgen, alternativ werden die Schichten in ihrer Gesamtheit in einem einzigen Verfahrensschritt ausgehärtet.

Hierbei kann beispielsweise folgendermaßen vorgegangen werden: Es werden nacheinander drei Basecoats aufgetragen, von denen jeder neben einem Bindemittel zur Gewährleistung eines ausreichenden Korrosionsschutzes Metallpartikel enthält. Ein erster Basecoat wird aufgetragen, der kein Schmiermittel enthält. Hierauf folgend wird weiterer Basecoat aufgetragen, der Molybdänsulfid als Schmiermittel umfasst. Schließlich wird ein dritter Basecoats aufgebracht, der PTFE als Schmiermittel enthält, danach erfolgt das thermische Aushärten der dreischichtigen Beschichtung.

Neben den genannten Komponenten können, wie aus dem Stand derTechnik bekannt, den einzelnen Basecoats weitere Zusatzstoffe wie Dickungsmittel, Entschäumer, Benetzungsmittel, Tenside, Füllstoffe oder Farbpigmente zugesetzt sein.

Wie aus dem Stand der Technik bekannt, ist es beim erfindungsgemäßen Verfahren bevorzugt, dass das Werkstück vor dem Aufbringen der Beschichtung vorbehandelt wird. Mögliche Behandlungsmethoden sind hierbei Reinigen, Entfetten, Beizen, Sandstrahlen, Druckluftstrahlen und/oder Phosphatieren.

Es ist in einer Weiterentwicklung der Erfindung vorgesehen, dass auf die ein- oder mehrschichtige Beschichtung ein klassischer ein- oder mehrschichtiger Topcoat aufgetragen wird. In diesem Zusammenhang wird jede Beschichtung, die ein Bindemittel, aber keine Metallpigmente zum aktiven Korrosionsschutz umfasst, als Topcoat bezeichnet, d.h. es wird nicht zwischen "Topcoat" und "Versiegelung" unterschieden. Der Topcoat kann, wie aus dem Stand der Technik bekannt, optional ein Schmiermittel enthalten. Es besteht auch die Möglichkeit, dass der Topcoat neben Farbpigmenten und anderen Komponenten, die dem Fachmann bekannt sind, gewisse Mengen an Metallpartikeln zu Erzeugung eines "Metallic-Looks" enthält.

Im Folgenden wird die Funktionsweise der Erfindung anhand von Ausführungsbeispielen erläutert.

### Beispiel 1

Zur Beschichtung von Stahlschrauben werden drei Bäder mit Basecoats A, B und C vorbereitet. Jedes der Bäder wird folgendermaßen hergestellt.

29,2 Gewichts-% entionisiertes Wasser werden unter mäßigem Rühren mit 4,6 Gewichts-% γ-Glycidoxypropyltrimethoxysilan und 0,9 Gewichts-% Borsäure vermischt. Nach 3 Stunden Verrühren werden zu der Mischung weitere 45,1 Gewichts-% entionisiertes Wasser und ein Netzmittel-Gemisch enthaltend 2,3 Gewichts-% eines nichtionischen, ethoxylierten Nonylphenol-Netzmittels ("NENN") mit einer Molmasse von 395 und einem spezifischen Gewicht von 1,0298 bei 20/20°C sowie 2,3 Gewichts-% eines NENN mit einer Molmasse von 616 und einem spezifischen Gewicht von 1,057 bei 20/20°C, hinzugegeben. Zu dieser Mischung werden dann weitere 3,1 Gewichts-% des genannten Silans, 6,3 Gewichts-% Azeton und 1,1 Gewichts-% 1-Nitropropan hinzugegeben. Hierzu werden Zinkpaste und pulverförmiges PTFE in je nach Bad unterschiedlichen Gewichtsanteilen hinzugegeben. Das Zink in Flockenform besitzt eine Partikeldicke von ca. 0,1 bis 0,5 µm und eine längste Ausdehnung der einzelnen Partikel von ca. 80 µm. Die eingesetzten Stoffe werden anschließend ca. 3 Stunden in einem Cowles-Dissolver durchmischt, der mit ca. 960 UpM betrieben wird. Zu der hieraus erhaltenen Mischung werden dann, während das Rühren 1 Stunde fortgesetzt wird, 0,6 Gewichts-% Natrium-bis-(tridecyl)-sulfosuccinat (anionisches Netzmittel) hinzugegeben und das Mischen wird für ca. 12 Stunden fortgesetzt. Nachdem das hieraus erhaltene Beschichtungsmittel 6 Tage gealtert ist, werden weitere 4,5 Gewichts-% γ-Glycidoxypropyltrimethoxysilan unter Rühren hinzugegeben.

Die Gewichtsanteile von Zinkpaste und PTFE werden so gewählt, dass (bezogen auf 100 Gewichts-% des fertigen Basecoats)
- Bad A 35 Gewichts-% Zinkpaste und kein PTFE,
- Bad B 35 Gewichts-% Zinkpaste sowie 1 Gewichts-% PTFE und
- Bad C 35 Gewichts-% Zinkpaste sowie 3 Gewichts-% PTFE
enthält.

Die Stahlschrauben werden in einer Reinigungslösung bestehend aus Wasser, in dem in je 1 Liter Wasser 9 g Kaliumphosphat und 27 g Kaliumhydroxid gelöst wurden, bei 75°C entfettet und anschließend mit Leitungswasser gereinigt. Der Entfettungs- und Reinigungsvorgang wird nochmals wiederholt und anschließen werden die Schrauben getrocknet.

Zur Beschichtung werden die Schrauben in einen Drahtkorb gegeben, der in ein Bad A eingetaucht wird. Anschließend wird der Korb aus dem Bad gehoben und der überschüssige Basecoat wird bei 300 U/min in zwei Schleudervorgängen von je 10 Sekunden abgeschleudert.

Danach werden die Schrauben aus dem Korb entfernt und das Bindemittel im Ofen für 10 Minuten bei 70°C vorgetrocknet und anschließend bei 320°C für 30 Minuten ausgehärtet. Nach dem Aushärten der ersten Schicht werden die Schrauben in einem zweiten Drahtkorb in ein Bad B eingetaucht. Anschließend werden die bereits beschriebenen Schleuder- und Aushärtevorgänge wiederholt.

Schließlich werden die beschriebenen Beschichtungs-, Schleuder- und Aushärtevorgänge mit dem Basecoat in Bad C wiederholt.

Es ergibt sich hierdurch eine äußerst dünne Beschichtung mit einer Stärke von, ca. 30 µm, die zum einen ausgezeichnete Korrosionschutzeigenschaften aufweist, zum anderen eine exakte Einstellung der Reibungszahl ermöglicht.

### Beispiel 2 (stellt nicht die Erfindung dar)

Zur Beschichtung von Stahlschrauben werden drei Bäder mit Basecoats D, E und F vorbereitet. Für jeden der Basecoats wird ein Bindemittel mit folgenden Komponenten hergestellt.
Trimethoxyvinylsilan: 9,8 Gewichts-%,
Titan-ethylhexanolat (Tetra-2-ethylhexyl Titanat): 24,9 Gewichts-%,
N-Butyl Polytitanat (Titan tetrabutanolat, polymer): 36,8 Gewichts-%,
Alkohol: 14,5 Gewichts-%, sowie
Antiabsetzmittel: insgesamt 11,4 Gewichts-%. Es werden verschiedene Antiabsetzmittel eingesetzt, hier: 2,6 Gewichts-% amorphe Kieselsäure, 3,1 Gewichts-% PaintAdditiveY25 SN (Ashland) und 5,7 Gewichts-% Ethocell 45-Lösung 11 %-ig in Alkohol der Ewald Dörken AG sowie
Netz- und Dispergieradditiv: 2,6 Gewichts-% Disperbyk 160 Lösung 20 % in aromatischen Kohlenwasserstoffen (Dörken)
Summe: 100 Gewicht-% bezogen auf das Bindemittel

Zur Einstellung der Korrosionsschutzeigenschaften wird ein Gemisch von Zinkpaste (Zinkpaste: 90 Gewichts-% Zinkstaub mit 10 Gewichts-% organischem Lösungsmittel angeteigt) mit einem mittleren Durchmesser der Zinkpartikel von ca. 4 µm sowie Aluminiumpaste eingesetzt. Das Gewichtsverhältnis Zinkpaste : Aluminiumpaste beträgt hierbei 55:2. Neben der Metallpartikelpaste wird dem Bindemittel optional auch ein Schmiermittel zugesetzt, wobei die Gewichtsanteile je nach Basecoat variieren, wie unten erläutert wird.

Jeder der Basecoats wird in einem kühl- und heizbaren Ansatzbehälter mit integriertem, stufenlos regelbaren Rührwerk hergestellt. Die vorstehend für das Bindemittel genannten Komponenten sowie Metallpaste und Schmiermittel werden in der angegebenen Reihenfolge nacheinander in dem Ansetzbehälter unter Rühren vermischt. Die Temperatur liegt zwischen +5°C und +60°C. Das Rührwerk ist auf 1.000 UpM eingestellt und nach dem Zugeben der jeweiligen Komponente wird für 5 Minuten gemischt.

Die Gewichtsanteile von Metallpaste und Schmiermittel werden so gewählt, dass
- Bad D 57 Gewichts-% Paste und kein Schmiermittel,
- Bad E 57 Gewichts-% Paste und 5 Gewichts-% Polyethylen sowie
- Bad F 57 Gewichts-% Paste und 2 Gewichts-% PTFE,
jeweils bezogen auf 100 Gewichts-% Basecoat, enthält.

Analog Beispiel 1 werden Stahlschrauben nacheinander in den drei Bädern beschichtet. Die Aushärtung der einzelnen Schichten erfolgt hierbei innerhalb von jeweils 30 Minuten bei 200°C Objekttemperatur.

Es ergibt sich eine Beschichtung mit hervorragenden Korrosionsschutzeigenschaften, bei der durch die außen liegende, PTFE aufweisende Schicht eine Reibungszahl exakt eingestellt ist. Durch das Vorhandensein der mittleren, Polyethylen aufweisenden Schicht sind auch bei einer Beschädigung der äußeren Schicht ausreichend definierte tribologische Eigenschaften gewährleistet.

## Patentansprüche

1. Verfahren zum Einstellen der Reibungszahl der Oberfläche eines metallischen Werkstücks durch Aufbringen und Aushärten einer mehrschichtigen Korrosionsschutz-Beschichtung in wässriger oder organischer Phase mit einer dem Werkstück zugewandten Grenzfläche und mit einer dem Werkstück abgewandten Grenzfläche,
wobei mehrere Basecoats schichtweise aufgebracht werden, die jeweils mindestens ein Bindemittel und metallische Partikel aufweisen, wobei mindestens einer der Basecoats mindestens ein Schmiermittel aufweist,
**dadurch gekennzeichnet, dass**
- das Bindemittel ausgewählt ist aus der Gruppe bestehend aus Silanen, Siloxanen, Silikaten, Titanaten und Chrom-VI-Verbindungen oder Mischungen aus Polymerisationsprodukten derselben, dass
- die Metallpartikel zum Korrosionsschutz beitragen, und dass
- die Reibungszahl eingestellt wird durch eine Schmiermittelkonzentration, die beigleichbleibender Schmiermittelzusammensetzung dem Werkstück zugewandten Grenzfläche niedriger ist äls an der dem Werkstück abgewandten Grenzfläche.

2. Verfahren nach mindestens einem der vorangehenden Ansprüche, **dadurch gekennzeichnet, dass** die Schmiermittelzusammensetzung Schmiermittel mit einem Schmelzpunkt von unter 150°C und Schmiermittel mit einem Schmelzpunkt von 150°C oder höher aufweist, wobei die Konzentration von Schmiermitteln mit einem Schmelzpunkt von 150°C oder höher an der dem Werkstück abgewandten Grenzfläche sich unterscheidet von der an der dem Werkstück zugewandten Grenzfläche.

3. Verfahren nach Anspruch 2, **dadurch gekennzeichnet, dass** die Konzentration von Schmiermitteln mit einem Schmelzpunkt von 150°C oder höher an der dem Werkstück abgewandten Grenzfläche höher ist als an der dem Werkstück zugewandten Grenzfläche.

4. Verfahren nach Anspruch 2, **dadurch gekennzeichnet, dass** die Konzentration von Schmiermitteln mit einem Schmelzpunkt bis zu 150°C an der dem Werkstück abgewandten Grenzfläche höher ist als an der dem Werkstück zugewandten Grenzfläche.

5. Verfahren nach mindestens einem der vorstehenden Ansprüche, **dadurch gekennzeichnet, dass** das wenigstens eine Schmiermittel ausgewählt ist aus der Gruppe bestehend aus Halogenkohlenwasserstoffen, MoS₂, Bornitrid, Graphit, fluoriertem Graphit, Carnaubawachs, Polysulfonen, Polyolefinharzen, Mischungen derselben oder einer Kombination hieraus.

6. Verfahren nach Anspruch 5, **dadurch gekennzeichnet, dass** als Halogenkohlenwasserstoff-Schmiermittel insbesondere polytetrafluorethylen (PTFE), Polyvinylidenfluorid (PVDF), Tetrafluorethylen/Hexafluorpropylen-Copolymer (FEP), Perfluoralkoxy-Copolymer (PFA), Copolymer von Tetrafluorethylen mit perfluoriertem Propylen und Perfluoralkylvinylether (EPE), Copolymer aus Tetrafluorethylen und Perfluormethylvinylether (MFA), Mischungen derselben oder eine Kombination hieraus ausgewählt werden.

7. Verfahren nach Anspruch 5, **dadurch gekennzeichnet, dass** als Polyolefin-Schmiermittel insbesondere Polyethylen (PE), und Polypropylen (PP), Mischungen derselben oder einer Kombination hieraus ausgewählt werden.

8. Verfahren nach mindestens einem der vorstehenden Ansprüche, **dadurch gekennzeichnet, dass** die metallischen Partikel ausgewählt sind aus der Gruppe bestehend aus Zink, Aluminium, Zinn, Magnesium, Nickel, Kobalt, Mangan, Titan sowie Mischungen und Legierungen derselben, in Form von Plättchen, Körnern oder Staub, oder einer Kombination hieraus.

9. Verfahren nach mindestens einem der vorstehenden Ansprüche, **dadurch gekennzeichnet, dass** organische Copolymere des Bindemittels mit Epoxiden, Urethanen, Acrylaten oder Polyestern oder einer Kombination hieraus eingesetzt werden.

10. Verfahren nach wenigstens einem der vorstehenden Ansprüche mit den Schritten:
- ein- oder mehrschichtiges Aufbringen eines ersten Basecoats, umfassend ein Bindemittel, Metallpartikel, die zum Korrosionsschutz geeignet sind, und optional ein Schmiermittel, in wässriger oder organischer Phase, auf das Werkstück
- anschließendes schichtweises Aufbringen wenigstens eines weiteren Basecoats, jeweils umfassend ein Bindemittel, Metallpartikel und ein Schmiermittel, in wässriger oder organischer Phase,
wobei wenigstens zwei Basecoats mit unterschiedlicher Schmiermittelkonzentration verwendet werden.

11. Verfahren nach mindestens einem der vorstehenden Ansprüche, **dadurch gekennzeichnet, dass** das Werkstück vor dem Aufbringen der Beschichtung vorbehandelt, insbesondere gereinigt, entfettet, gesandstrahlt, luftgestrahlt, phosphatiert, grundiert oder mit einem Haftvermittler versehen wird.

12. Verfahren nach mindestens einem der vorstehenden Ansprüche, **dadurch gekennzeichnet, dass** nach dem Aufbringen der Beschichtung ein ein- oder mehrschichtiger Topcoat aufgebracht wird.

13. Werkstück mit einer metallischen Oberfläche, mit einer mehrschichtigen Korrosionsschutz-Beschichtung mit einer dem Werkstück zugewandten Grenzfläche und mit einer dem Werkstück abgevandten Grenzfläche aus mehreren Basecoats, die jeweils schichtweise aufgebracht sind und die jeweils mindestens ein Bindemittel und metallische Partikel aufweisen, wobei mindestens einer der Basecoats mindestens ein Schmiermittel aufweist,
**dadurch gekennzeichnet, dass**
das Bindemittel ausgewählt ist aus der Gruppe bestehend aus Silanen, Siloxanen, Silikaten, Titanaten und Chrom-VI-Verbindungen, oder Mischungen aus Polymerisationsprodukten derselben, dass
- die Metallpartikel zum Korrosionsschutz beitragen, und dass
- die Reibungszahl bei gleichbleibender Schmiermittelzusammensetzung eingestellt ist durch eine Schmiermittelkonzentration, die an der dem Werkstück zugewandten Grenzfläche niedriger ist als an der dem Werkstück abgewandten Grenzfläche.

## Claims

1. A method for adjusting the friction coefficient of the surface of a metallic workpiece through application and hardening of a multi-layer, anticorrosive coating in aqueous or organic phase with a boundary layer facing the workpiece and with a boundary layer facing away from the workpiece, wherein several base coats are applied in coats, each of which have at least one binding agent and metallic particles, wherein at least one of the base coats has at least one lubricant, **characterized in that**
- the binding agent is selected from the group consisting of silanes, siloxanes, silicates, titanates, and chromium VI compounds or mixtures made of polymerization products thereof, **in that**
- the metal particles contribute to the corrosion protection and **in that**
- the friction coefficient is adjusted through a lubricant concentration, which, in the case of a constant lubricant composition, is lower on the boundary layer facing the workpiece than on the boundary layer facing away from the workpiece.

2. The method according to at least one of the preceding claims, **characterized in that** the lubricant composition has lubricants with a melting point of under 150° C and lubricants with a melting point of 150° C or higher, wherein the concentration of lubricants with a melting point of 150° C or higher on the boundary layer facing away from the workpiece differs from the boundary layer facing the workpiece.

3. The method according to claim 2, **characterized in that** the concentration of lubricants with a melting point of 150° C or higher is higher on the boundary layer facing away from the workpiece than on the boundary layer facing the workpiece.

4. The method according to claim 2, **characterized in that** the concentration of lubricants with a melting point of up to 150° C is higher on the boundary layer facing away from the workpiece than on the boundary layer facing the workpiece.

5. The method according to at least one of the preceding claims, **characterized in that** the at least one lubricant is selected from the group consisting of halogen hydrocarbons, MoS₂, boron nitride, graphite, fluorinated graphite, carnauba wax, polysulfones, polyolefin resins, mixtures thereof or a combination thereof.

6. The method according to claim 5, **characterized in that** in particular polytetrafluoroethylene (PTFE), polyvinylidene fluoride (PVDF), tetrafluoroethylene/hexafluoropropylene copolymer (FEP), perfluoroalkoxy copolymer (PFA), copolymer of tetrafluoroethylene with perfluorinated propylene and perfluoroalkyl vinyl ether (EPE), copolymer of tetrafluoroethylene and perfluoromethyl vinyl ether (MFA), mixtures thereof or a combination thereof are selected as the halogen hydrocarbon lubricant.

7. The method according to claim 5, **characterized in that** in particular polyethylene (PE) and polypropylene (PP), mixtures of them or a combination of them are selected as the polyolefin lubricant.

8. The method according to at least one of the preceding claims, **characterized in that** the metallic particles are selected from the group consisting of zinc, aluminum, tin, magnesium, nickel, cobalt, manganese, titanium as well as mixtures and alloys thereof, in the form of platelets, grains or dust, or a combination thereof.

9. The method according to at least one of the preceding claims, **characterized in that** organic copolymers of the binding agent are used with epoxides, urethanes, acrylates or polyesters or a combination thereof.

10. The method according to at least one of the preceding claims with the steps:
- single- or multi-layer application of a first base coat, comprising a binding agent, metal particles, which are suitable for corrosion protection, and optionally a lubricant, in aqueous or organic phase, on the workpiece
- subsequent application in coats of at least one additional base coat, respectively comprising a binding agent, metal particles and a lubricant, in aqueous or organic phase,
wherein at least two base coats with different lubricant concentrations are used.

11. The method according to at least one of the preceding claims, **characterized in that** the workpiece is pretreated before the application of the coating, in particular cleaned, degreased, sand-blasted, air-blasted, phosphatized, primed or provided with an adhesive agent.

12. The method according to at least one of the preceding claims, **characterized in that** after the application of the coating, a single- or multi-layer top coat is applied.

13. A workpiece with a metallic surface, with a multi-layer, anticorrosive coating with a boundary layer facing the workpiece and with a boundary layer facing away from the workpiece made of several base coats, which are applied respectively in coats and that have respectively at least one binding agent and metallic particles, wherein at least one of the base coats has at least one lubricant,
**characterized in that**
- the binding agent is selected from the group consisting of silanes, siloxanes, silicates, titanates, and chromium VI compounds or mixtures made of polymerization products thereof, **in that**
- the metal particles contribute to the corrosion protection and **in that**
- the friction coefficient, in the case of a constant lubricant composition, is adjusted through a lubricant concentration, which is lower on the boundary layer facing the workpiece than on the boundary layer facing away from the workpiece.

## Revendications

1. Procédé pour régler le coefficient de frottement de la surface d'une pièce métallique par application et durcissement d'un revêtement anti-corrosion à plusieurs couches en phase aqueuse ou organique avec une interface tournée vers la pièce et avec une interface opposée à la pièce, plusieurs Basecoats étant appliqués en couches, lesquels comportent respectivement au moins un liant et des particules métalliques, au moins un des Basecoats comprenant au moins un lubrifiant,
**caractérisé en ce que**
le liant est sélectionné dans le groupe constitué par des silanes, des siloxanes, des silicates, des titanates et des composés de chrome VI ou des mélanges de produits de polymérisation de ceux-ci, **en ce que**
les particules métalliques contribuent à la protection anti-corrosion, et **en ce que**
le coefficient de frottement est réglé par une concentration de lubrifiant, qui, pour une composition de lubrifiant constante, est moins élevée sur l'interface tournée vers la pièce que sur l'interface opposée à la pièce.

2. Procédé selon au moins une des revendications précédentes, **caractérisé en ce que** la composition de lubrifiant comporte un lubrifiant avec un point de fusion inférieur à 150 °C et un lubrifiant avec un point de fusion de 150 °C ou plus, la concentration de lubrifiants avec un point de fusion de 150 °C ou plus sur l'interface opposée à la pièce se différenciant de celle sur l'interface tournée vers la pièce.

3. Procédé selon la revendication 2, **caractérisé en ce que** la concentration de lubrifiants avec un point de fusion de 150 °C ou plus est plus élevée sur l'interface opposée à la pièce que sur l'interface tournée vers la pièce.

4. Procédé selon la revendication 2, **caractérisé en ce que** la concentration de lubrifiants avec un point de fusion de 150 °C max. est plus élevée sur l'interface opposée à la pièce que sur l'interface tournée vers la pièce.

5. Procédé selon au moins une des revendications précédentes, **caractérisé en ce que** le au moins un lubrifiant est sélectionné dans le groupe constitué par des hydrocarbures halogénés, du MoS₂, du nitrure de bore, du graphite, du graphite fluoré, de la cire de carnauba, des polysulfones, des résines polyoléfines, des mélanges de ceux-ci ou une combinaison de ceux-ci.

6. Procédé selon la revendication 5, **caractérisé en ce que** le lubrifiant à base d'hydrocarbures halogénés sélectionné est en particulier un polytétrafluoroéthylène (PTFE), polyfluorure de vinylidène (PVDF), copolymère de tétrafluoroéthylène/d'hexafluoropropylène (FEP), copolymère perfluoroalcoxy (PFA), copolymère de tétrafluoroéthylène avec propylène perfluoré et alkyl-vinyl-éthers perfluorés (EPE), copolymère de tétrafluoroéthylène et méthyl-vinyl-éthers perfluorés (MFA), des mélanges de ceux-ci ou une combinaison de ceux-ci.

7. Procédé selon la revendication 5, **caractérisé en ce qu'**en particulier du polyéthylène (PE) et du polypropylène (PP), des mélanges de ceux-ci ou une combinaison de ceux-ci, sont sélectionnés en tant que lubrifiant à base de polyoléfine.

8. Procédé selon au moins une des revendications précédentes, **caractérisé en ce que** les particules métalliques sont sélectionnées dans le groupe constitué de zinc, d'aluminium, d'étain, de magnésium, de nickel, de cobalt, de manganèse, de titane et de mélanges et d'alliages de ceux-ci, sous la forme de plaquettes, de petits grains ou de poussière, ou d'une combinaison de ceux-ci.

9. Procédé selon au moins une des revendications précédentes, **caractérisé en ce que** des copolymères organiques du liant sont utilisés avec des résines époxy, des uréthanes, des acrylates ou des polyesters ou une combinaison de ceux-ci.

10. Procédé selon au moins une des revendications précédentes comprenant les étapes suivantes :
- application sur la pièce d'une ou de plusieurs couches d'un premier Basecoat, comprenant un liant, des particules métalliques qui sont adaptées à la protection anti-corrosion, et en option un lubrifiant, en phase aqueuse ou organique
- application en couche consécutive d'au moins un autre Basecoat, comprenant respectivement un liant, des particules métalliques et un lubrifiant, en phase aqueuse ou organique,
au moins deux Basecoats ayant différentes concentrations de lubrifiant étant utilisés.

11. Procédé selon au moins une des revendications précédentes, **caractérisé en ce que** la pièce est prétraitée avant l'application du revêtement, en particulier nettoyée, dégraissée, décapée au sable, décapée à l'air, phosphatée, appliqué ou munie d'un agent adhésif.

12. Procédé selon au moins une des revendications précédentes, **caractérisé en ce qu'**une ou plusieurs couches de Topcoat est/sont appliquée(s) après l'application du revêtement.

13. Pièce comportant une surface métallique, avec un revêtement anti-corrosion à plusieurs couches avec une interface tournée vers la pièce et avec une interface opposée à la pièce constituée de plusieurs Basecoats, qui sont appliqués en couches et qui comportent respectivement au moins un liant et des particules métalliques, au moins un des Basecoats comportant au moins un lubrifiant,
**caractérisée en ce que**
le liant est sélectionné dans le groupe constitué de silanes, siloxanes, silicates, titanates et composés de chrome VI ou des mélanges de produits de polymérisation de ceux-ci, **en ce que**
les particules métalliques contribuent à la protection anti-corrosion, et **en ce que**
le coefficient de frottement est réglé pour une composition de lubrifiant constante par une concentration de lubrifiant, qui est moins élevée sur l'interface tournée vers la pièce que sur l'interface opposée à la pièce.
